# EUROPEAN PATENT SPECIFICATION

(11) **EP 3 094 587 B1**
(45) Date of publication and mention of the grant of the patent: **26.12.2018**
(21) Application number: 14878687.4
(22) Date of filing: 16.01.2014
(51) Int. Cl.: B66B 5/00, B66B 11/02, G06F 21/10, H04L 9/32, H04W 12/08

(54) **VALIDITY CHECK OF A LICENSE OF A MAINTENANCE UNIT FOR ACCESSING A CONTROLLER OF A PASSENGER TRANSPORTATION/ACCESS DEVICE OF A BUILDING**
GÜLTIGKEITSKONTROLLE EINER LIZENZ EINER WARTUNGSEINHEIT ZUM ZUGRIFF AUF EINE STEUERUNG EINER PERSONENBEFÖRDERUNGS-/ZUGANGSVORRICHTUNG EINES GEBÄUDES
VÉRIFICATION DE VALIDITÉ D'UNE LICENCE D'ACCÈS D'UNE UNITÉ DE MAINTENANCE À UN CONTRÔLEUR D'UN DISPOSITIF DE TRANSPORT/D'ACCÈS DE PASSAGERS D'UN BÂTIMENT

(43) Date of publication of application: 23.11.2016
(73) Proprietor: KONE Corporation, 00330 Helsinki (FI)
(72) Inventor: HOVI, Antti, FI-05810 Hyvinkää (FI); ELOMAA, Niko, FI-05830 Hyvinkää (FI); STAENGLER, Ferenc, FI-05810 Hyvinkää (FI); AHOKAS, Sampo, FI-05830 Hyvinkää (FI)
(74) Representative: Papula Oy
(86) International application number: PCT/FI2014/050034
(87) International publication number: WO 2015/107258

(56) References cited:
- EP-A1- 2 192 669
- JP-A- H09 240 945
- JP-A- 2013 178 845
- US-A- 4 512 442
- US-A1- 2004 149 816
- US-A1- 2007 168 294
- US-A1- 2008 047 783
- US-A1- 2008 283 342
- US-A1- 2012 305 334
- US-A1- 2012 305 339
- US-A1- 2013 238 536
- US-B1- 6 993 576
- HEMING WANG ET AL: "Application of RFID technology in elevator maintenance supervision", COMPUTER SCIENCE AND SERVICE SYSTEM (CSSS), 2011 INTERNATIONAL CONFERENCE ON, IEEE, 27 June 2011 (2011-06-27), pages 2112-2115, XP032005612, DOI: 10.1109/CSSS.2011.5974832 ISBN: 978-1-4244-9762-1

## Description

### BACKGROUND OF THE INVENTION:

### Field of the Invention:

The invention relates passenger transportation/access devices of a building. In particular, the invention relates to checking the validity of a license of a maintenance unit for accessing a controller of a passenger transportation/access device of a building and to a controller performing the checking.

### Description of the Related Art:

Modern passenger transportation/access devices (such as lifts/elevators, escalators, automatic doors, integrated access control systems, etc.) of a building typically have an electronic controller device associated with them that is configured to perform various control operations on its associated transportation/access device. Furthermore, a maintenance unit is typically connectable to such a controller. The maintenance unit is a device, typically portable, with application software carried by a service person that is configured to perform various maintenance operations on the controller when connected to it. These maintenance operations may include e.g. routine status checks, diagnostics, configuration checks, software updates, installation operations, service operations, and other similar operations.

To prevent unauthorized use of such a maintenance unit, the maintenance unit may be granted a time-based license having a preset validity period during which it is granted access to the controller of the passenger transportation/access device of the building. The validity period may be e.g. 3 months, 6 months, or 12 months. If the license is not renewed before its expiry, it cannot be used to access the controller anymore.

Today, the validity check of the license may be performed e.g. by a service/maintenance center via an online connection with the maintenance unit. This, however, is not cost-effective, particularly with a large device base.

Therefore, an object of the present invention is to alleviate the problems described above and to introduce a solution that allows checking the validity of a license of a maintenance unit for accessing a controller of a passenger transportation/access device of a building, without a need for an online connection to a service center or the like.

### SUMMARY OF THE INVENTION

A first aspect of the present invention is a method of checking the validity of a license of a maintenance unit for accessing a controller of a passenger transportation/access device of a building. A preset expiration time of the license for accessing the controller is read from an encrypted license file stored in the maintenance unit in response to detecting the maintenance unit being connected to the controller. A preset manufacturing time of the controller and a current usage time of the controller, both stored in a secure memory of the controller, are read. The usage time is a counter value incremented only while the controller is powered on. A total of the manufacturing time and the current usage time of the controller are compared to the expiration time of the license. In response to the total of the manufacturing time and the current usage time of the controller not exceeding the expiration time of the license, the license is determined to be valid.

A second aspect of the present invention is a controller of a passenger transportation/access device of a building. The controller is connectable to a maintenance unit that has a license for accessing the controller. The controller comprises at least one processor, and at least one memory including computer program code. The at least one memory and the computer program code are configured to, with the at least one processor, cause the controller at least to perform:
reading a preset expiration time of the license from an encrypted license file stored in the maintenance unit in response to detecting the maintenance unit being connected to the controller;
reading a preset manufacturing time of the controller and a current usage time of the controller stored in a secure memory of the controller, the usage time being a counter value incremented only while the controller is powered on;
comparing a total of the manufacturing time and the current usage time of the controller to the expiration time of the license; and
determining the license to be valid in response to the total of the manufacturing time and the current usage time of the controller not exceeding the expiration time of the license.

A third aspect of the present invention is a computer program stored on a computer readable medium and comprising code adapted to cause the following steps when executed on the controller:
reading a preset expiration time of the license from an encrypted license file stored in the maintenance unit in response to detecting the maintenance unit being connected to the controller;
reading a preset manufacturing time of the controller and a current usage time of the controller stored in a secure memory of the controller, the usage time being a counter value incremented only while the controller is powered on;
comparing a total of the manufacturing time and the current usage time of the controller to the expiration time of the license; and
determining the license to be valid in response to the total of the manufacturing time and the current usage time of the controller not exceeding the expiration time of the license.

In an embodiment of the invention, access to the controller is granted to the maintenance unit in response to the license being determined to be valid.

In an embodiment of the invention, a preset issue time of the license is read from the encrypted license file stored in the maintenance unit. A total of the manufacturing time and a current usage time of the controller is compared to the issue time of the license. In response to the issue time of the license exceeding the total of the manufacturing time and the current usage time of the controller, the current usage time of the controller is incremented until the issue time of the license equals the total of the manufacturing time and the current usage time of the controller.

In an embodiment of the invention, the expiration time of the license, the issue time of the license, and the manufacturing time of the controller have a same time format, and the usage time of the controller indicates elapsed time units of the same time format.

In an embodiment of the invention, the time format comprises unix time stamp, and the time unit comprises seconds.

It is to be understood that the aspects and embodiments of the invention described above may be used in any combination with each other. Several of the aspects and embodiments may be combined together to form a further embodiment of the invention. A method, a controller or a computer program which is an aspect of the invention may comprise at least one of the embodiments of the invention described above.

The invention allows checking the validity of a license of a maintenance unit for accessing a controller of a passenger transportation/access device of a building, without a need for an online connection to a service center or the like. The controller itself can reliably and securely check whether the license of the maintenance unit is still valid.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** is a flow diagram illustrating a method according to an embodiment of the present invention; and
**Figure 2** is a block diagram illustrating apparatuses according to an embodiment of the present invention.

### DETAILED DESCRIPTION OF THE INVENTION

Reference will now be made in detail to the embodiments of the invention, examples of which are illustrated in the accompanying drawings.

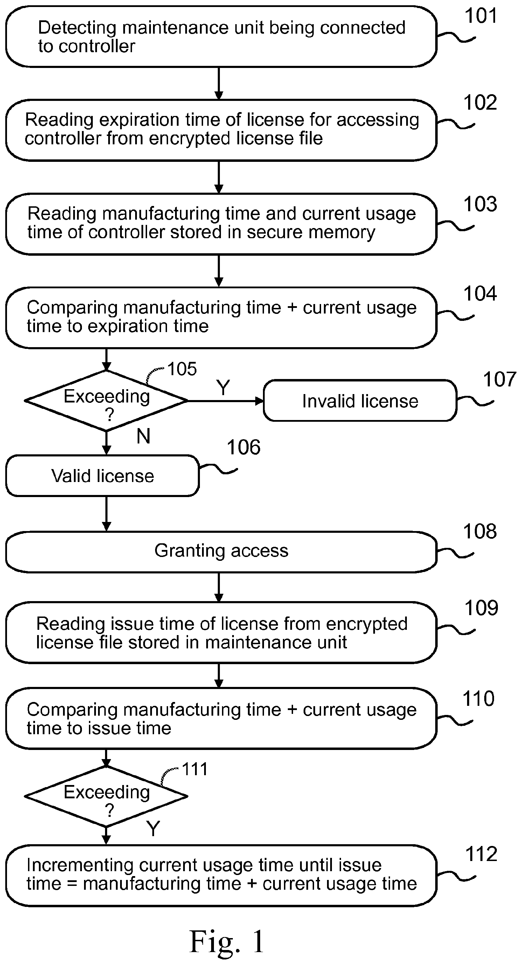

Figure 1 is a flow diagram illustrating a method according to an embodiment of the present invention. In this embodiment, the steps 101-112 are performed by a controller 210 of a passenger transportation/access device of a building.

At step 101, the controller detects a maintenance unit being connected to it. In response, at step 102, a preset expiration time of a license of the maintenance unit is read. The license, if valid, will grant the maintenance unit access to the controller. The expiration time is read from an encrypted license file that is stored in the maintenance unit.

At step 103, a preset manufacturing time of the controller and a current usage time of the controller are read. Both the manufacturing time and the usage time are stored in a secure memory of the controller.

The usage time is a counter value incremented only while the controller is powered on. In other words, if power is not on (such as e.g. during transport before installation, or during installation when powered off), the usage time is not incremented.

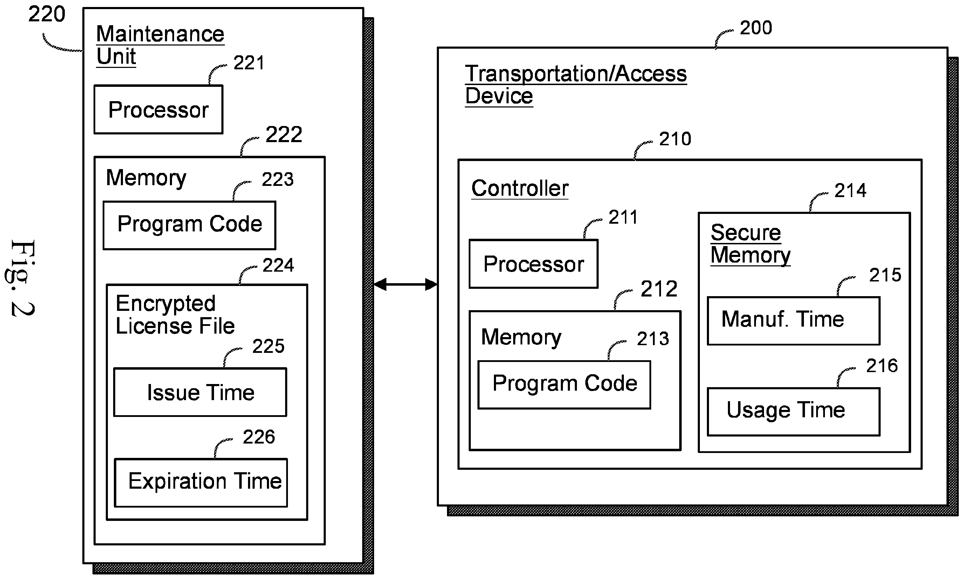

In the embodiments of Figure 1 and Figure 2, the expiration time of the license, the issue time of the license, and the manufacturing time of the controller may have a same time format, and the usage time of the controller may indicate elapsed time units of the same time format. The time format may comprise e.g. unix time stamp, and the time unit may comprise e.g. seconds. Obviously, other time formats and time units may be utilized.

At step 104, a total of the manufacturing time and the current usage time of the controller are compared to the expiration time of the license. If the total of the manufacturing time and the current usage time of the controller does not exceed the expiration time of the license, step 105, the license is determined to be valid, step 106. Otherwise, the license is determined to be invalid, step 107. If the license is determined to be valid, the maintenance unit may be granted access to the controller, step 108.

At optional step 109, a preset issue time of the license is read from the encrypted license file stored in the maintenance unit. A total of the manufacturing time and a current usage time of the controller is compared to the issue time of the license, step 110. If the issue time of the license exceeds the total of the manufacturing time and the current usage time of the controller, step 111, the current usage time of the controller is incremented until the issue time of the license equals the total of the manufacturing time and the current usage time of the controller, step 112.

Figure 2 is a block diagram illustrating apparatuses according to an embodiment of the present invention. The apparatuses include a passenger transportation/access device 200 of a building, a controller 210 of the passenger transportation/access device 200, and a maintenance unit 220 connectable to the controller 230.

In the embodiments of Figure 1 and Figure 2, the passenger transportation/access device 200 may be e.g. one of a lift/elevator, an escalator, an automatic door, and an integrated access control system. The controller 210 is configured to perform various control operations on its associated passenger transportation/access device 200. The maintenance unit 220 connectable to the controller 210 is configured to perform various maintenance operations on the controller 210 when connected to it. The maintenance unit 220 may be a portable device carried by a service person, such as e.g. a laptop, a personal digital assistant, a tablet computer, a smartphone, or the like. The maintenance operations may include e.g. routine status checks, diagnostics, configuration checks, software updates, installation operations, service operations, and the like.

The controller 210 comprises at least one processor 211, and at least one memory 212 including computer program code 213. The controller 210 further comprises at least one secure memory 214 including a manufacturing time 215 of the controller 210 and a current usage time 216 of the controller 210. Even though the at least one memory 212 and the at least one secure memory 214 are illustrated as separate entities in Figure 2, they can be integrated as one entity. For example, the at least one secure memory 214 could be a secured portion in the at least one memory 212.

The maintenance unit 220 comprises at least one processor 221, and at least one memory 222 including computer program code 223 for performing various maintenance operations. E.g. the at least one memory 222 may further include an encrypted license file 224 that contains a preset issue time 225 of a license of the maintenance unit 220 for accessing the controller 210 of the passenger transportation/access device 200. The encrypted license file 224 further contains a preset expiration time 226 of the license.

The at least one memory 212 and the computer program code 213 are configured to, with the at least one processor 211, cause the controller 210 at least to perform:
reading the preset expiration time 226 of the license from the encrypted license file 224 stored in the maintenance unit 220 in response to detecting the maintenance unit 220 being connected to the controller 210;
reading the preset manufacturing time 215 of the controller 210 and the current usage time 216 of the controller 210 stored in the secure memory 214 of the controller 210, the usage time 216 being a counter value incremented only while the controller 210 is powered on;
comparing a total of the manufacturing time 215 and the current usage time 216 of the controller 210 to the expiration time 226 of the license; and
determining the license to be valid in response to the total of the manufacturing time 215 and the current usage time 216 of the controller 210 not exceeding the expiration time 226 of the license.

The at least one memory 212 and the computer program code 213 may be configured to, with the at least one processor 211, further cause the controller 210 at least to perform granting the maintenance unit 220 access to the controller 210 in response to the license being determined to be valid.

The at least one memory 212 and the computer program code 213 may be configured to, with the at least one processor 211, further cause the controller 210 at least to perform:
reading a preset issue time 225 of the license from the encrypted license file 224 stored in the maintenance unit 220;
comparing a total of the manufacturing time 215 and a current usage time 216 of the controller 210 to the issue time 225 of the license; and
in response to the issue time 225 of the license exceeding the total of the manufacturing time 215 and the current usage time 216 of the controller 210, incrementing the current usage time 216 of the controller 210 until the issue time 225 of the license equals the total of the manufacturing time 215 and the current usage time 216 of the controller 210.

The exemplary embodiments can include, for example, any suitable servers, workstations, PCs, laptop computers, other devices, and the like, capable of performing the processes of the exemplary embodiments. The devices and subsystems of the exemplary embodiments can communicate with each other using any suitable protocol and can be implemented using one or more programmed computer systems or devices.

It is to be understood that the exemplary embodiments are for exemplary purposes, as many variations of the specific hardware used to implement the exemplary embodiments are possible, as will be appreciated by those skilled in the hardware and/or software art(s). For example, the functionality of one or more of the components of the exemplary embodiments can be implemented via one or more hardware and/or software devices.

The exemplary embodiments can store information relating to various processes described herein. This information can be stored in one or more memories, such as a hard disk, optical disk, magneto-optical disk, RAM, and the like. One or more databases can store the information used to implement the exemplary embodiments of the present inventions. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be conveniently implemented using one or more general purpose processors, microprocessors, digital signal processors, micro-controllers, and the like, programmed according to the teachings of the exemplary embodiments of the present inventions, as will be appreciated by those skilled in the computer and/or software art(s). Appropriate software can be readily prepared by programmers of ordinary skill based on the teachings of the exemplary embodiments, as will be appreciated by those skilled in the software art. In addition, the exemplary embodiments can be implemented by the preparation of application-specific integrated circuits or by interconnecting an appropriate network of conventional component circuits, as will be appreciated by those skilled in the electrical art(s). Thus, the exemplary embodiments are not limited to any specific combination of hardware and/or software.

Stored on any one or on a combination of computer readable media, the exemplary embodiments of the present inventions can include software for controlling the components of the exemplary embodiments, for driving the components of the exemplary embodiments, for enabling the components of the exemplary embodiments to interact with a human user, and the like. Such software can include, but is not limited to, device drivers, firmware, operating systems, development tools, applications software, and the like. Such computer readable media further can include the computer program product of an embodiment of the present inventions for performing all or a portion (if processing is distributed) of the processing performed in implementing the inventions. Computer code devices of the exemplary embodiments of the present inventions can include any suitable interpretable or executable code mechanism, including but not limited to scripts, interpretable programs, dynamic link libraries (DLLs), Java classes and applets, complete executable programs, Common Passenger Request Broker Architecture (CORBA) passengers, and the like. Moreover, parts of the processing of the exemplary embodiments of the present inventions can be distributed for better performance, reliability, cost, and the like.

As stated above, the components of the exemplary embodiments can include computer readable medium or memories for holding instructions programmed according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, and the like. Non-volatile media can include, for example, optical or magnetic disks, magneto-optical disks, and the like. Volatile media can include dynamic memories, and the like. Common forms of computer-readable media can include, for example, a floppy disk, a flexible disk, hard disk, magnetic tape, any other suitable magnetic medium, a CD-ROM, CD±R, CD±RW, DVD, DVD-RAM, DVD±RW, DVD±R, HD DVD, HD DVD-R, HD DVD-RW, HD DVD-RAM, Blu-ray Disc, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, or any other suitable medium from which a computer can read.

While the present inventions have been described in connection with a number of exemplary embodiments, and implementations, the present inventions are not so limited, but rather cover various modifications, and equivalent arrangements, which fall within the purview of prospective claims.

## Claims

1. A method of checking the validity of a license of a maintenance unit for accessing a controller of a passenger transportation/access device of a building, **characterized in** the method comprising:
reading (102) a preset expiration time of the license for accessing the controller from an encrypted license file stored in the maintenance unit in response to detecting the maintenance unit being connected to the controller;
reading (103) a preset manufacturing time of the controller and a current usage time of the controller stored in a secure memory of the controller, the usage time being a counter value incremented only while the controller is powered on;
comparing (104) a total of the manufacturing time and the current usage time of the controller to the expiration time of the license; and
determining (106) the license to be valid in response to the total of the manufacturing time and the current usage time of the controller not exceeding the expiration time of the license.

2. The method according to claim 1, further comprising granting (108) the maintenance unit access to the controller in response to the license being determined to be valid.

3. The method according to claim 1 or 2, further comprising:
reading (109) a preset issue time of the license from the encrypted license file stored in the maintenance unit;
comparing (110) a total of the manufacturing time and a current usage time of the controller to the issue time of the license; and
in response to the issue time of the license exceeding the total of the manufacturing time and the current usage time of the controller, incrementing (112) the current usage time of the controller until the issue time of the license equals the total of the manufacturing time and the current usage time of the controller.

4. The method according to any of claims 1-3, wherein the expiration time of the license, the issue time of the license, and the manufacturing time of the controller have a same time format, and the usage time of the controller indicates elapsed time units of said same time format.

5. The method according to claim 4, wherein the time format comprises unix time stamp, and the time unit comprises seconds.

6. A computer program stored on a computer readable medium and comprising code adapted to cause the steps of any of claims 1-5 when executed on said controller.

7. A controller (210) of a passenger transportation/access device (200) of a building, said controller (210) connectable to a maintenance unit (220) having a license for accessing the controller (210), the controller (210) comprising:
at least one processor (211); and
at least one memory (212) including computer program code (213);
**characterized in** the at least one memory (212) and the computer program code (213) being configured to, with the at least one processor (211), cause the controller (210) at least to perform:
reading a preset expiration time (226) of the license from an encrypted license file (224) stored in the maintenance unit (220) in response to detecting the maintenance unit (220) being connected to the controller (210);
reading a preset manufacturing time (215) of the controller (210) and a current usage time (216) of the controller (210) stored in a secure memory (214) of the controller (210), the usage time (216) being a counter value incremented only while the controller (210) is powered on;
comparing a total of the manufacturing time (215) and the current usage time (216) of the controller (210) to the expiration time (226) of the license; and
determining the license to be valid in response to the total of the manufacturing time (215) and the current usage time (216) of the controller (210) not exceeding the expiration time (226) of the license.

8. The controller (210) according to claim 7, wherein the at least one memory (212) and the computer program code (213) are further configured to, with the at least one processor (211), cause the controller (210) to perform granting the maintenance unit (220) access to the controller (210) in response to the license being determined to be valid.

9. The controller (210) according to claim 7 or 8, wherein the at least one memory (212) and the computer program code (213) are further configured to, with the at least one processor (211), cause the controller (210) to perform:
reading a preset issue time (225) of the license from the encrypted license file (224) stored in the maintenance unit (220);
comparing a total of the manufacturing time (215) and a current usage time (216) of the controller (210) to the issue time (225) of the license; and
in response to the issue time (225) of the license exceeding the total of the manufacturing time (215) and the current usage time (216) of the controller (210), incrementing the current usage time (216) of the controller (210) until the issue time (225) of the license equals the total of the manufacturing time (215) and the current usage time (216) of the controller (210).

10. The controller (210) according to any of claims 7-9, wherein the expiration time (226) of the license, the issue time (225) of the license, and the manufacturing time (215) of the controller (210) have a same time format, and the usage time (216) of the controller (210) indicates elapsed time units of said same time format.

11. The controller (210) according to claim 10, wherein the time format comprises unix time stamp, and the time unit comprises seconds.

## Patentansprüche

1. Ein Verfahren zum Überprüfen der Gültigkeit einer Lizenz einer Wartungseinheit für den Zugriff auf eine Steuerung einer Personenbeförderungs-/ Zugangsvorrichtung eines Gebäudes, **dadurch gekennzeichnet, dass** das Verfahren umfasst:
Lesen (102) einer voreingestellten Ablaufzeit der Lizenz für den Zugriff auf die Steuerung aus einer verschlüsselten Lizenzdatei, die in der Wartungseinheit gespeichert ist, als Reaktion auf das Erkennen, dass die Wartungseinheit mit der Steuerung verbunden ist;
Lesen (103) einer voreingestellten Fertigungszeit der Steuerung und einer aktuellen Nutzungszeit der Steuerung, die in einem Sicherheitsspeicher der Steuerung gespeichert ist, wobei die Nutzungszeit ein Gegenwert ist, der nur erhöht wird, während die Steuerung eingeschaltet ist;
Vergleichen (104) des Gesamtwertes aus Fertigungszeit und aktueller Nutzungszeit der Steuerung mit der Ablaufzeit der Lizenz; und
Festlegen (106) der Gültigkeit der Lizenz als Reaktion darauf, dass der Gesamtwert aus Fertigungszeit und aktueller Nutzungszeit der Steuerung die Ablaufzeit der Lizenz nicht überschreitet.

2. Das Verfahren nach Anspruch 1, weiterhin umfassend das Gewähren (108) des Zugriffs der Wartungseinheit auf die Steuerung, als Reaktion auf die Festlegung der Gültigkeit der Lizenz.

3. Das Verfahren nach Anspruch 1 oder 2, weiterhin umfassend:
Lesen (109) einer voreingestellten Ausgabezeit der Lizenz aus der verschlüsselten Lizenzdatei, die in der Wartungseinheit gespeichert ist;
Vergleichen (110) des Gesamtwertes aus Fertigungszeit und aktueller Nutzungszeit der Steuerung mit der Ausgabezeit der Lizenz; und
als Reaktion darauf, dass die Ausgabezeit der Lizenz den Gesamtwert aus Fertigungszeit und aktueller Nutzungszeit der Steuerung überschreitet, Erhöhen (112) der aktuellen Nutzungszeit der Steuerung, bis die Ausgabezeit der Lizenz gleich des Gesamtwertes aus Fertigungszeit und aktueller Nutzungszeit der Steuerung ist.

4. Das Verfahren nach einem der Ansprüche 1-3, wobei die Ablaufzeit der Lizenz, die Ausgabezeit der Lizenz, und die Fertigungszeit der Steuerung dasselbe Zeitformat haben, und die Nutzungszeit der Steuerung die verstrichenen Zeiteinheiten des gleichen Zeitformats anzeigt.

5. Das Verfahren nach Anspruch 4, wobei das Zeitformat Unix-Zeitstempel umfasst, und die Zeiteinheit Sekunden umfasst.

6. Ein Computerprogramm, das auf einem computerlesbaren Medium gespeichert ist, und einen Code umfasst, der angepasst ist, um die Schritte nach einem der Ansprüche 1-5 zu veranlassen, wenn er auf der Steuerung ausgeführt wird.

7. Eine Steuerung (210) einer Personenbeförderungs-/ Zugangsvorrichtung (200) eines Gebäudes, wobei die Steuerung (210) mit einer Wartungseinheit (220) verbunden werden kann, die eine Lizenz für den Zugriff auf die Steuerung (210) hat, wobei die Steuerung (210) umfasst:
mindestens einen Prozessor (211); und
mindestens einen Speicher (212), einschließlich des Computerprogrammcodes (213);
**gekennzeichnet dadurch, dass** der mindestens eine Speicher (212) und der Computerprogrammcode (213) dazu konfiguriert sind, mit dem mindestens einen Prozessor (211) zu bewirken, dass die Steuerung (210) mindestens ausführt:
Lesen einer voreingestellten Ablaufzeit (226) der Lizenz aus einer verschlüsselten Lizenzdatei (224), die in der Wartungseinheit (220) gespeichert ist, als Reaktion auf das Erkennen, dass die Wartungseinheit (220) mit der Steuerung (210) verbunden ist;
Lesen einer voreingestellten Fertigungszeit (215) der Steuerung (210) und einer aktuellen Nutzungszeit (216) der Steuerung (210), die in einem Sicherheitsspeicher (214) der Steuerung (210) gespeichert ist, wobei die Nutzungszeit (216) ein Gegenwert ist, der nur erhöht wird, während die Steuerung (210) eingeschaltet ist;
Vergleichen des Gesamtwertes aus Fertigungszeit (215) und aktueller Nutzungszeit (216) der Steuerung (210) mit der Ablaufzeit (226) der Lizenz; und
Festlegen (106) der Gültigkeit der Lizenz als Reaktion darauf, dass der Gesamtwert aus Fertigungszeit (215) und aktueller Nutzungszeit (216) der Steuerung (210) die Ablaufzeit (226) der Lizenz nicht überschreitet.

8. Die Steuerung (210) nach Anspruch 7, wobei der mindestens eine Speicher (212) und der Computerprogrammcode (213) weiterhin dazu konfiguriert sind, mit dem mindestens einen Prozessor (211) zu bewirken, dass die Steuerung (210) ausführt, dass der Wartungseinheit (220) Zugriff auf die Steuerung (210) erlaubt wird, als Reaktion darauf, dass die Lizenz als gültig festgelegt wurde.

9. Die Steuerung (210) nach Anspruch 7 oder 8, wobei der mindestens eine Speicher (212) und der Computerprogrammcode (213) weiterhin dazu konfiguriert sind, mit dem mindestens einen Prozessor (211) zu bewirken, dass die Steuerung (210) mindestens ausführt:
Lesen (109) einer voreingestellten Ausgabezeit (225) der Lizenz aus der verschlüsselten Lizenzdatei (224), die in der Wartungseinheit (220) gespeichert ist;
Vergleichen des Gesamtwertes aus Fertigungszeit (215) und aktueller Nutzungszeit (216) der Steuerung (210) mit der Ausgabezeit (225) der Lizenz; und
als Reaktion darauf, dass die Ausgabezeit (225) der Lizenz den Gesamtwert aus Fertigungszeit (215) und aktueller Nutzungszeit (216) der Steuerung (210) überschreitet, Erhöhen der aktuellen Nutzungszeit (216) der Steuerung (210), bis die Ausgabezeit (225) der Lizenz gleich des Gesamtwertes aus Fertigungszeit (215) und aktueller Nutzungszeit (216) der Steuerung (210) ist.

10. Die Steuerung (210) nach einem der Ansprüche 7-9, wobei die Ablaufzeit (226) der Lizenz, die Ausgabezeit (225) der Lizenz, und die Fertigungszeit (215) der Steuerung (210) dasselbe Zeitformat haben, und die Nutzungszeit (216) der Steuerung (210) die verstrichenen Zeiteinheiten des gleichen Zeitformats anzeigt.

11. Die Steuerung (210) nach Anspruch 10, wobei das Zeitformat Unix-Zeitstempel umfasst, und die Zeiteinheit Sekunden umfasst.

## Revendications

1. Procédé de vérification de la validité d'une licence d'une unité de maintenance pour accéder à une unité de commande d'un dispositif de transport/accès de passagers d'un bâtiment, **caractérisé en ce que** le procédé comprend le fait :
de lire (102) une date d'expiration prédéfinie de la licence pour accéder à l'unité de commande à partir d'un fichier de licence crypté stocké dans l'unité de maintenance en réponse à la détection du fait que l'unité de maintenance est reliée à l'unité de commande ;
de lire (103) une date de fabrication prédéfinie de l'unité de commande et une date d'utilisation actuelle de l'unité de commande stockées dans une mémoire sécurisée de l'unité de commande, la date d'utilisation étant une valeur de compteur incrémentée uniquement pendant que l'unité de commande est mise sous tension ;
de comparer (104) un total de la date de fabrication et de la date d'utilisation actuelle de l'unité de commande à la date d'expiration de la licence ; et
de déterminer (106) la licence comme étant valide en réponse au fait que le total de la date de fabrication et de la date d'utilisation actuelle de l'unité de commande ne dépasse pas la date d'expiration de la licence.

2. Procédé selon la revendication 1, comprenant en outre le fait d'autoriser (108) l'unité de maintenance à accéder à l'unité de commande en réponse au fait que la licence est déterminée comme étant valide.

3. Procédé selon la revendication 1 ou 2, comprenant en outre le fait :
de lire (109) une date d'émission prédéfinie de la licence à partir du fichier de licence crypté stocké dans l'unité de maintenance ;
de comparer (110) un total de la date de fabrication et d'une date d'utilisation actuelle de l'unité de commande à la date d'émission de la licence ; et
d'incrémenter (112), en réponse au fait que la date d'émission de la licence dépasse le total de la date de fabrication et de la date d'utilisation actuelle de l'unité de commande, la date d'utilisation actuelle de l'unité de commande jusqu'à ce que la date d'émission de la licence soit égale au total de la date de fabrication et de la date d'utilisation actuelle de l'unité de commande.

4. Procédé selon l'une des revendications 1 à 3, dans lequel la date d'expiration de la licence, la date d'émission de la licence, et la date de fabrication de l'unité de commande ont un même format temporel, et la date d'utilisation de l'unité de commande indique des unités temporelles écoulées dudit même format temporel.

5. Procédé selon la revendication 4, dans lequel le format temporel comprend une estampille temporelle unix, et l'unité temporelle comprend des secondes.

6. Programme informatique stocké sur un support lisible par ordinateur et comprenant un code adapté pour provoquer les étapes de l'une des revendications 1 à 5 lorsqu'il est exécuté sur ladite unité de commande.

7. Unité de commande (210) d'un dispositif de transport/accès de passagers (200) d'un bâtiment, ladite unité de commande (210) pouvant être reliée à une unité de maintenance (220) ayant une licence pour accéder à l'unité de commande (210), l'unité de commande (210) comprenant :
au moins un processeur (211) ; et
au moins une mémoire (212) comportant un code de programme informatique (213) ;
**caractérisée en ce que** l'au moins une mémoire (212) et le code de programme informatique (213) sont configurés, avec l'au moins un processeur (211), pour amener l'unité de commande (210) au moins à effectuer :
la lecture d'une date d'expiration prédéfinie (226) de la licence à partir d'un fichier de licence crypté (224) stocké dans l'unité de maintenance (220) en réponse à la détection du fait que l'unité de maintenance (220) est reliée à l'unité de commande (210) ;
la lecture d'une date de fabrication prédéfinie (215) de l'unité de commande (210) et d'une date d'utilisation actuelle (216) de l'unité de commande (210) stockées dans une mémoire sécurisée (214) de l'unité de commande (210), la date d'utilisation (216) étant une valeur de compteur incrémentée uniquement pendant que l'unité de commande (210) est mise sous tension ;
la comparaison d'un total de la date de fabrication (215) et de la date d'utilisation actuelle (216) de l'unité de commande (210) avec la date d'expiration (226) de la licence ; et
la détermination de la licence comme étant valide en réponse au fait que le total de la date de fabrication (215) et de la date d'utilisation actuelle (216) de l'unité de commande (210) ne dépasse pas la date d'expiration (226) de la licence.

8. Unité de commande (210) selon la revendication 7, dans laquelle l'au moins une mémoire (212) et le code de programme informatique (213) sont en outre configurés, avec l'au moins un processeur (211), pour amener l'unité de commande (210) à autoriser l'unité de maintenance (220) à accéder à l'unité de commande (210) en réponse au fait que la licence est déterminée comme étant valide.

9. Unité de commande (210) selon la revendication 7 ou 8, dans lequel l'au moins une mémoire (212) et le code de programme informatique (213) sont en outre configurés, avec l'au moins un processeur (211), pour amener l'unité de commande (210) à effectuer :
la lecture d'une date d'émission prédéfinie (225) de la licence à partir du fichier de licence crypté (224) stocké dans l'unité de maintenance (220) ;
la comparaison d'un total de la date de fabrication (215) et d'une date d'utilisation actuelle (216) de l'unité de commande (210) avec la date d'émission (225) de la licence ; et
l'incrémentation, en réponse au fait que la date d'émission (225) de la licence dépasse le total de la date de fabrication (215) et de la date d'utilisation actuelle (216) de l'unité de commande (210), de la date d'utilisation actuelle (216) de l'unité de commande (210) jusqu'à ce que la date d'émission (225) de la licence soit égale au total de la date de fabrication (215) et de la date d'utilisation actuelle (216) de l'unité de commande (210).

10. Unité de commande (210) selon l'une des revendications 7 à 9, dans laquelle la date d'expiration (226) de la licence, le date d'émission (225) de la licence, et la date de fabrication (215) de l'unité de commande (210) ont le même format temporel, et la date d'utilisation (216) de l'unité de commande (210) indique des unités temporelles écoulées dudit même format temporel.

11. Unité de commande (210) selon la revendication 10, dans laquelle le format temporel comprend une estampille temporelle unix, et l'unité temporelle comprend des secondes.
